# EUROPEAN PATENT SPECIFICATION

(11) **EP 0 485 668 B1**
(45) Date of publication and mention of the grant of the patent: **17.01.1996**
(21) Application number: 90250286.3
(22) Date of filing: 16.11.1990
(51) Int. Cl.: C11B 9/02, B01D 11/02, A23L 1/221

(54) **Microwave extraction of volatile oils and apparatus therefor**
Mikrowellenaussonderung von flüchtigen Ölen und Vorrichtung dafür
Extraction d'huiles volatiles par micro-ondes et appareil pour le faire

(43) Date of publication of application: 20.05.1992
(73) Proprietor: HER MAJESTY THE QUEEN IN RIGHT OF CANADA AS REPRESENTED BY THE MINISTER OF THE ENVIRONMENT, Gloucester, Ontario (CA)
(72) Inventor: Paré, Jocelyn, Gloucester, Ontario (CA)
(74) Representative: Pfenning, Meinig & Partner

(56) References cited:
- EP-A- 0 398 798
- WO-A-79/00982
- AU-A- 578 313
- GB-A- 1 209 675
- GB-A- 2 004 197
- US-A- 2 925 328
- US-A- 3 870 053

## Description

This invention relates to an apparatus and improved method of extracting soluble natural products from biological matter using microwave energy and apparatus therefor.

### Prior Art

Various microwave advances have been documented where e.g. grains containing fats and oils have been dried by microwave heating, followed by steps to remove husks and to extract oils, e.g. U.S. 4,464,402, Gannon. Grains and seeds also have been microwave treated to heat the extracted medium, e.g. Ganzler and Salgo, 1987, Z.Lebensm Unters Forsch 184: 274-276. In these experiments, radiation was primarily employed to heat the extractant medium.

Microwave drying of food products followed by subsequent solvent extraction is disclosed in U.S. 4,554,132, Collins, but with no extraction process.

British 1,209,675 discloses inactivating enzymes of palm fruits with microwave radiation, followed by solvent extraction of palm oil.

Heitkamp et al., Canadian 987,993, describes a microwave induced migration of flavour and aroma constituents towards the surface in certain tissue such as tobacco or tea in the presence of moisture and optionally a solvent. Heitkamp does not teach any enhanced extraction of the flavour or aroma constituents into the extracted medium.

Additionally, Craveiro et al. in the Flavour and Fragrance Journal 4, 1989: 43-44, discuss the production of volatile material from plant material exposed to microwave energy in an air stream.

Ganzler, Salgo, and Valko in Journal of Chromatography 371, 1986: 299-306, disclose microwave sample preparation for organophosphate pesticides, antinutritives and crude fat samples. Dried sample materials are milled to the point of particulation and suspended in an organic medium. The Ganzler et al method describes an extraction in which the glandular and vascular matter of the dried sample material is destroyed mechanically prior to microwave treatment; this causes a loss of volatile oils and allows for undesirable materials to be obtained. That method calls for a long centrifugation time, a well-known extraction technique. In addition, the method indicates that the suspensions of samples and solvents are cooled and subsequently re-exposed to microwaves. Thus, heating of the extraction environment occurs with no recovery of the extractant or any volatile oils.

AU-B-47902/85 describes an extraction process from plant base material for obtaining fragant oil extracts by combining the plant material with a liquid carrier material and subjecting the combination to electromagnetic energy radiation in a frequency range of 20,000 to 30,000 Hz. In a similar way an extraction processes and an extracting apparatus disclosed in GB-A-2004197 and US-A-2925328 use ultrasonic radiation. EP-A-0398798, published after the filing date, relates to a method of obtaining volatile oils from biological material, being in a macerated form.

Steam distillation and solvent extraction methods are well known in the art but are limited by high temperatures, as well as being dangerous when using certain organic solvents and being deficient in producing an uncontaminated product.

Accordingly, there is a need for an extraction method and apparatus for producing maximum yields and recovery of volatile oils and other useful substances contained in cellular biological material by microwave inducement without any of the disadvantages and inherent limitations of the prior art.

With the present invention, an extraction protocol for various natural products is provided, without being limited to, human usage, e.g. ingestion or topical application, without the hazards associated with conventional extraction techniques and which is more selective, efficient and rapid.

The present invention employs microwave energy to generate a sudden temperature increase in the glandular and sometimes vascular systems of biological material, contacted with an appropriate quantity of a suitable non-aqueous organic solvent or extractant as defined hereinafter.

A particularly advantageous method involves immersing a source of biological material having cellular matter containing the oils in a non-aqueous organic extractant, the source of material having a substantially intact glandular system and a moisture content sufficient to rupture the glandular system under microwave treatment. Thereafter, the source material is exposed to a microwave energy source to elevate the temperature of the biological material to a degree sufficient to rupture the glandular system and express the volatile oil from the biological material into the organic extractant.

As the volatile oils are extracted during the process, they are cooled with the non-aqueous organic extractant. Further, an additional source of the biological material is added to the resulting extractant, containing extracted volatile oils from the first extraction step, and exposed so that the combined biological material and the resulting extractant is treated with a microwave energy source sufficient to elevate the temperature of the biological material to rupture the glandular system of the biological material contained in the resulting extractant to express and disperse volatile oil therefrom. This may be repeated several times. In the next step, the volatile oils are separated from the further extractant thus obtained.

In a particularly advantageous embodiment, concentrated extracts of the volatile oils can be obtained upon reducing the amount of solvent normally required for that purpose. Thus, where an extractant is used repeatedly, solvent usage is reduced resulting in a more economical and valuable operation.

In contrast to other procedures, this invention causes the microwave energy to be absorbed by the material being treated in a preferential manner, compared to the solvent, so that oils expressed from the biological material are then immediately cooled by the surrounding solvent, thus avoiding exposure of the oils and sensitive materials to heat degradation by the microwave treatment of the biological material.

Therefore, Applicant's process is a "cool process" in which the solvent medium does not heat up due to absorption by the solvent of microwave energy and substantially all of the microwave energy used is imparted to the material being treated. The positive differential in temperature between the biological material and the extract ensures that the oil migrates towards the extractant.

The extractant may be selected from suitable organic solvents known to those skilled in the art, for example, alkanes e.g. hexane or other such suitable non-aqueous aliphatic organics. Generally, such materials are termed "microwave transparent", i.e. they do not heat or there is no significant microwave energy absorption upon exposure due to the lack of a molecular dipole moment. Thus, cooling of the extracted oils from cellular biological material occurs. Cosolvents may also be employed. The extractants should have a static dielectric constant of between about 0 to 28, or should be transparent to the microwave frequency of the microwave source.

In the case where the biological material is substantially devoid of any moisture, rehydration or resolvation of the material may be achieved, prior to microwave treatment, by incorporating a solvent which is not transparent to microwaves, i.e., those having a net dipole moment. These solvents include, for example, methanol, ethanol and mixtures of solvents, etc.

In the event that a partially transparent organic solvent is used, the temperature of the same remains below that of the biological material and more specifically, the extracted oil, during a microwave treatment. This ensures that the oil containing matter will be cooled. It will also ensure the migration of the oil into the extractant.

Another aspect of the invention employs an extraction media system either as a single extractant or a solution of two or more suitable and compatible extractants, in series, to obtain fractionated oil extractions.

Applicant has found that by utilizing non-particulated material as the material to be treated, superior results are obtained; the prior art has proposed utilizing finely ground or particulated dried material which results in substantial non-selective alteration of glandular and vascular tissues which is, of course, a primary necessity for volatile oil extraction. By using substantially whole or large pieces of material, destruction of glandular and vascular systems is avoided resulting in higher and more valuable extraction of desired products.

Glandular tissue, as used herein, refers to those organs responsible for various secretions i.e. nectary secretions. Vascular tissue refers to channels for the conveyance of fluids. Generally, the volatile oils for extraction from biological material include the essential oils located in the glandular system. Such oils carry the essential odour or flavour of the biological material and are used in perfumes and flavourings. As is known, the volatile i.e. essential oils are distinguished from the fixed oils e.g. cottonseed, linseed or coconut oils etc. in that the former oils are not glycerides of fatty acids.

As used herein, the term "volatile oils" includes not only those substances derived from plant and animal materials such as essential oils, but also substances such as lipids, fatty oils, fatty acids, etc. which, while not having the same degree of volatility as essential oils, are expressed or "volatilized" from the glandular or like system of such plant and animal materials, by the process described herein.

The present invention is applicable to many types of tissue e.g. plant material for flavouring and fragrance purposes, and other tissues e.g. animal tissue. Examples of plant material include Canadian pepper mint, seaweeds such as Irish moss, various types of vegetables, e.g. onions, garlic and the like. In the case of animal tissue, liver, kidney, egg yolk, etc. or animal products e.g. sea anemones, sea cucumber and crustaceous products (e.g. lobster or other shell fish), warm and cold water fish (e.g. trout, etc.) can be employed to extract pigments, oils, etc. One preferred application relates to the extraction of the desirable oils from fish components such as the liver which are a source of desirable acids for pharmaceutical and human purposes e.g. volatile oils such as omega-3 and omega-6 oils and the like.

The present invention also provides an apparatus for the extraction of essences and other substances from biological material, comprising at least one microwave applicator and includes means for feeding a mixture of biological material and an extractant through the microwave applicator for treatment. Further, means are provided for separating liquid from the treated mixture and removing the extractant from the filtered liquid.

The microwave applicator may operate within available known parameters e.g. a power rating of about 200 to 10,000 Watts and a frequency range of within about 2,000 to 30,000 MHz. Any wavelength within the microwave spectrum which is absorbed to some extent by a component of the material, can be used as only minor changes in the irradiation time are necessary to compensate for changes in absorption. Several such apparatus applicators may be provided in parallel for exposure of the biological material thereby.

The apparatus provides a solvent reservoir of suitable material compatible with the organic solvents, and solvent inlet and sample inlet means. The mixture is fed into or through the applicator by a suitable means e.g. a pump and is subsequently passed into the filtering means e.g. filter paper stages, Teflon (TM) screening etc. for removal of residual plant material. In addition, the apparatus may include means for removing any water content derived from samples being treated; such means may include e.g. suitable desiccants for this purpose which may be incorporated as a separate stage or into e.g. the filtering means.

The material is preferably pumped to a separator e.g. a rotary vaporizer etc. for separation of the solvent from the oil material. The solvent may, additionally, be passed through a condenser such as those known in the art, for condensing the solvent.

Those skilled in the art will appreciate that the "passing" of the material mentioned herein is achieved through the use of suitable connecting lines e.g. glass tubing, Teflon (TM), quartz or other microwave transparent equipment for microwave treatment. In addition, the lines include suitable valves e.g. glass or Teflon stopcocks etc.

Having thus generally described the invention, reference will now be made to the accompanying drawing, illustrating a preferred embodiment and in which:

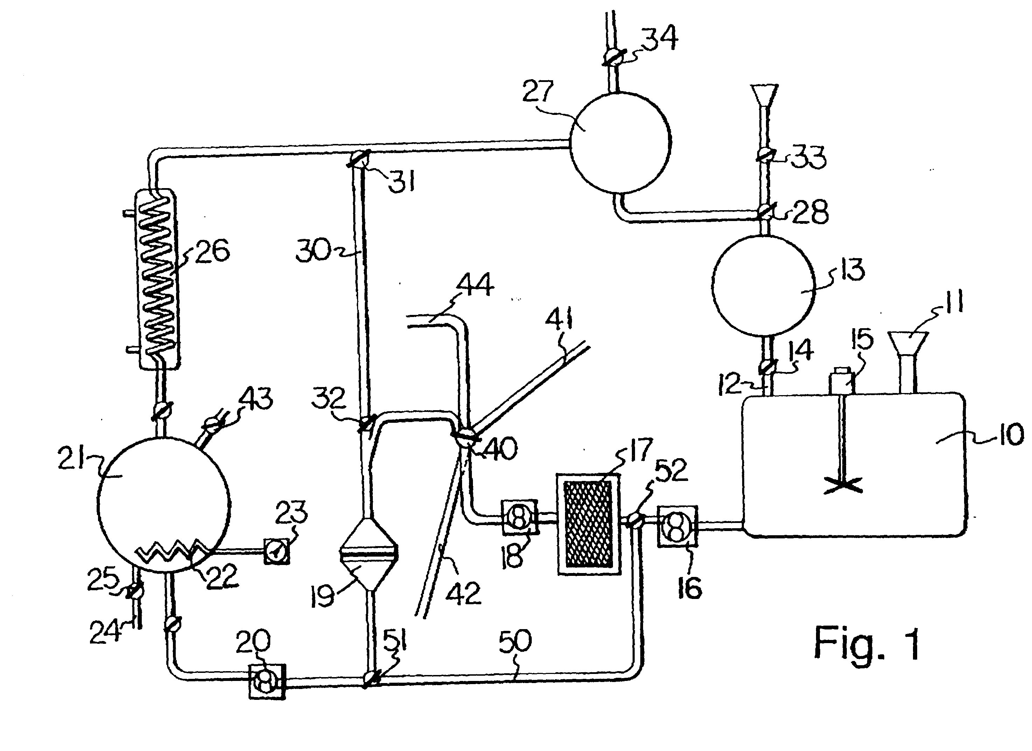

Figure 1 is a diagrammatic representation of the apparatus of the present invention.

With respect to the method, the microwave irradiation process generally proceeds as follows: the microwave rays travel freely through the microwave-transparent extraction medium and are allowed to reach the inner glandular and vascular systems of the biological material [a microwave transparent medium can be defined as a medium that does not possess a significant static dielectric constant i.e. net dipole moments, e.g. hexane (1.9), carbon tetrachloride (2.2), and liquid CO2 (1.6 at 0°C and 50 atm.) as opposed to large dielectric constant substances e.g. water (80.4)]. A subdivided portion of these microwave rays is absorbed by the biological material; the absorption efficiency is largely related to the moisture content (or added absorbing component) of the material at the time the extraction process is carried out. The result is a sudden rise in temperature inside the material which is more pronounced in the glandular and the vascular system. The temperature keeps rising until the internal pressure exceeds the capacity of expansion of the cell walls thus creating an explosion at the cell level. Substances located in the cells are free to flow out of the cells migrating to the surrounding medium that is cool and traps and dissolves the oils. The solid biological material can be removed e.g. filtered-off with the resulting solution being processed in the same manner as any other natural product extract.

The extractant amount used to contact or submerse the feed material can vary widely, normally sufficient to extract substantially all of the desired components to totally physically cover the biological material. The ratio of extractant to feed material (L/kg) can be e.g. about 1:1 to about 20:1.

Electron micrograph examination of freshly extracted plant material reveals that the degree of disruption in the internal structure of the gland system of, e.g. Canadian pepper mint, is as large for a 20-second microwave-induced extraction as it is for conventional 2-hour steam distillation and for 6-hour Soxhlet extraction processes. Electron micrographs also provide an explanation for the superior quality of the extracts obtained as the relatively short period of extraction e.g. 2 to 3 minutes can be varied so that the penetration power based on the extraction medium can be controlled. In the case of an essential oil from pepper mint, using e.g. hexane as solvent, the short extraction period combined with the use of non-particulated fresh material prevents pigments and other undesirable components that are located within the plant to be accessed by the extractant. Ground material is used in conventional steam distillation and other extraction processes where the final mesh size is very critical, and implies an extra step, compared to this invention. Direct visual examination corroborates this phenomenon as extracts obtained by this invention are far less pigmented than steam distillation counterparts.

This invention permits the possibility of using a system of extraction media, whether as a single extractant or a solution of two or more extractants, also in series, in order to obtain fractionated extracts in a matter of minutes and making use of the same equipment. Current technology requires separate distillation processes that are costly and time consuming. Different and extensive instrumentation is also required, resulting in a much larger capital investment. This invention enables a producer to perform a series of extraction and fractionation processes at the same site, using the same equipment, in less time than is required by current technology.

The period of time necessary to irradiate the material to extract the oils with microwave rays varies with the variety of the plant or other biological material; typical times being from about 10 to 100 seconds. Irradiation times also vary with the moisture content of the feed material since water is very efficient at absorbing microwave rays. The moisture content of the material should be from about 25% to about 90%. This extraction method can be used for batch processes as well as for continuous processes.

The extraction product may be recovered from the extractant (after separation from the residual solid plant material as by screening, filtering or centrifuging) if desired by distillation, reverse osmosis, preferential extraction, chromatography, etc. Suitable recovery techniques are known to those skilled in the art. The depleted extractant phase may be recycled without further purification.

Reference will now be made to the examples of the invention provided below wherein microwave radiation-induced extraction was used. Disruption of the glandular and vascular systems of a variety of materials, as in the particular manner described herein, demonstrate the improvements. These include, for example, yield, quality of the extract, reduced time and production costs (reduced personnel costs and reduced operational costs), reduced raw material costs (because of reduced raw material preparation costs), reduced number of operations, and reduced process-related hazards (to humans and to facilities), or a combination thereof, over the conventional extraction processes. These examples are illustrative and typical, but not exhaustive or limiting.

### EXAMPLE 1

Monarda fistulosa, a novel species of Monarda is a new product for perfumery and flavouring starting materials. It produces much higher concentration of geraniol in its essential oil than other genera within the Monarda. For comparative purposes, the essential oil of Monarda fistulosa was obtained by this method. In this example, 30 g of the fresh plant material were torn into fairly large pieces (same lot as for steam distillation) and placed in a 400 mL beaker and immersed in 175 mL of hexane and the temperature of the mixture was recorded; the mixture was submitted to a 15-second microwave irradiation period (of 500W and at 2450MHz) and the temperature of the medium was again recorded; this last step was repeated twice without taking further temperature measurements (i.e. a total of 45 seconds of microwave irradiation was applied and a total of 4 temperature measurements were taken). The data indicate that the internal temperature of the plant material became elevated during the exposure to thereby establish the required temperature gradient necessary for high extraction efficiency of the oils, etc. into the cooler hexane medium, (temperatures of only 15, 29, 44 and 57°C were reached by passive heat conduction from the plant material for microwave exposure period of 0, 15, 30 and 45 seconds, respectively). The yield was found to be 1.49%.

The cellular temperature of the plant material is high, i.e. of the order of 100°C owing to moisture content, and the intracellular moisture diffuses into the hexane medium to cause a slight temperature change, however this temperature is low in comparison to the oil material and therefore did not affect the temperature gradient to any appreciable extent evident from the extraction data.

Subsequent to the mixture of the oils and extractant medium cooling, the mixture was then filtered over a small quantity of sodium sulphate (to remove traces of water) and washed with 50mL of fresh hexane. The extract was reduced, the yield was determined and the extract was analyzed by gas chromatography coupled to a mass selective detector (the mass spectral data being compared to a library of standards). The data are summarized in Table I.

The same microwave-assisted experiment was repeated as per above until the last filtration step. At that point, instead of reducing the extract, the extract is used as an extraction medium to perform two other sets of experiments, i.e. a total of 90g of plant material is extracted (in three lots of 30g, each being submitted to three irradiation sequences of 15 seconds) in a single aliquot of hexane. The total extraction was then filtered (over a small quantity of sodium sulphate), rinsed with another 50mL of fresh hexane and reduced. The yield was determined and the contents were analyzed under the same conditions as per above. The yield (1.54%) and the sample contents proved to be identical to those noted above within the experimental error. Table I summarizes the analytical results and shows that the microwave-assisted extract was of greater commercial market value by virtue of its enhanced contents in geraniol.

**TABLE I**

| Component | Relative Concentration | |
|---|---|---|
| | Microwave process | Steam |
| Distillation | | |
| Octen-3-ol | 0.23 | 0.28 |
| Myrcene | ---- | 0.59 |
| p-Cymene | ---- | 0.12 |
| α-Terpinene | 0.21 | 0.96 |
| Linalool | 0.37 | 0.62 |
| Nerol | 0.57 | 0.33 |
| Geraniol | 98.48 | 94.83 |
| Germacreen D | 0.14 | 1.47 |
| Total | 100.00 | 99.20 |

A cumulative and sequential use of microwave-assisted extractions, combined to a judicious use of an appropriate solvent provides an extract in greater yield than conventional steam distillation products (0.94%) alone. Also, the extract is of higher commercial market value and reduces the quantity of solvent, another desirable factor. Furthermore, the time required to reduce and/or evaporate the extract to dryness is reduced to one-third. The latter enhances the efficiency of the process and reduces costs associated with manpower and energy consumption; in fact, reduction and/or evaporation of the solvent is the rate-determining step of this microwave-assisted extraction process. In the above example, three complete extracts are produced within ten minutes, whereas the same extract would have required a minimum of eight hours by conventional steam distillation processes.

### EXAMPLE 2

Intact garlic cloves having a 30% moisture content were immersed in 250 mL of dichloromethane. The immersed samples were then irradiated with microwave radiation at 625 Watts and a frequency 2,450 MHz for a single 30-second exposure period. The samples, being completely intact in this Example, illustrated exemplary constituent extraction with no contamination of the extracted constituents with less desirable constituents. Yields were found were to 22.2% for diallyl sulfide, 28.4% for 3-vinyl-1,2 dithi-5-ene and 49.4% for 2-vinyl-1,3 dithi-4-ene. The analysis of the products produced by the process herein is identified as µ-wave₂.

For comparative purposes, garlic samples were subjected to the following known techniques, namely hydrodiffision (HD₁); hyrdodistillation (HD₂); supercritical fluid carbon dioxide extraction (CO₂); µ-wave₁ utilizing a macerated garlic in a solvent extraction (dichloromethane) with microwave irradiation (4 times) for 125 seconds.

HD₁ denotes hydrodiffusion; HD₂ denotes hydrodistillation; CO₂ denotes supercritical fluid extraction with CO₂; µ-wave₁ denotes macerated garlic in dichloromethane with 4 irradiations of 125 seconds; µ-wave₂ denotes intact garlic cloves in dichloromethane and irradiated for a single 30-second microwave irradiation period.

The data clearly illustrate that even under brief exposure time (30 seconds) coupled with a cool medium for the extraction of the constituents, the technique of the present invention greatly exceeds the conventional techniques of hydrodiffusion, hydrodistillation, supercritical fluid extraction and, more importantly, microwave extraction where the sample was macerated and over exposed to microwave energy.

### EXAMPLE 3

A fresh rainbow trout (Salmon galrdneri) was provided and the pectoral fins, together with the dorsal fin and the head, were removed to form a source material for a first extraction (38.5g). From the same fish, the complete internal parts were separated to provide a source material for a second extraction (34.9g).

Each of these source materials were then subjected to a sequential series of microwave extractions (3 x 15 seconds) using the same extractant, according to the present invention. The apparatus employed was that described in Example 1; the extractant employed for each source material was hexane (a single 60 ml aliquot) which immersed the materials completely. It is important to note that the source materials were in a non-particulated state. In addition, the temperature of the extractant remained at a point where the extractant functioned to cool the expressed oil from these source materials.

The oils expressed from the starting materials were then separated from the hexane by procedures described in the other Examples and the recovered products were analyzed for their fatty acid contents.

As reported in the Agricultural Handbook 8-15 (U.S. Department of Agriculture, 1987), pressing of rainbow trout to separate essential oils from edible parts yields, by conventional techniques, a total of about 3.4% of lipids. In general terms, such pressing techniques require a significant amount of time, which by comparison to the techniques of the present invention, represent several times that of the microwave extraction technique herein. In addition, the percentage yield using the process of the present invention, for the essential oils, and using only trout fins and a small content of flesh as source material, is approximately equivalent (3.9%) to the same yields by conventional techniques when using whole edible fish parts. On the other hand, using the fish internal parts with the present invention, approximately five-fold (16.1 vs. 3.4%) increase in the amount of essential oils was obtained compared to the conventional pressing techniques.

Referring now to Figure 1, shown is the apparatus of the present invention having a reservoir or tank 10 with an inlet 11 for the biological material and an inlet 12 for the solvent previously discussed, which may be stored in solvent reservoir 13. Feeding the solvent into the tank 10 is controlled by valve 14. The mixture of solvent and biological material is stirred by a stirrer 15. A pump 16 feeds mixed solvent and plant material through a microwave applicator 17, with a typical power rating of about 200 to about 10,000 Watts and a typical operating frequency of between 2,000 to about 30,000 MHz. Further, pump 18 feeds the treated material and solvent to a filtering apparatus 19. Also, a microwave source could be positioned within the supply tubing to enclose it within the feed material tube. This will permit the use of metal tubing (e.g. steel tubing) while only using e.g. a greatly Ian (reinforced) housing. The microwaves act directly on the cellular material to disrupt the same subsequently releasing the oils or other substances into the extractant for cooling thereby.

A plurality of filters used with or without desiccants may be provided in the filtering apparatus, acting in parallel. This enables filtered residual biological solids to be removed periodically from individual filters, without shutting down the apparatus completely.

From the filtering apparatus 19, the filtered solvent and oils therein are pumped, by pump 20, to a separator 21 or recycled to the microwave applicator 17 via valves 51 and 52 and tube 50. Separator 21 is heated, as by external heater 22, controlled by a temperature controller 23, to evaporate the solvent. The remaining substance or substances in the separator 21 is drawn off periodically at outlet 24 controlled by valve 25.

Evaporated solvent is passed through a condenser 26, and condensed solvent is fed back into a main reservoir 27 where it is then fed to the solvent reservoir 13, controlled by valve 28. In a modification, the condensed solvent could be fed directly to the solvent reservoir 13.

Some of the condensed solvent can be diverted through the filter 19 to increase the extraction in the filter. This is provided by pipe 30, controlled by valves 31 and 32. Various relief valves are provided, as at 33 and 34, for opening the apparatus to atmospheric pressure.

As described previously herein, the apparatus is for obtaining volatile oils and other substances by the use of microwaves to disrupt the glandular cells containing such oils. The apparatus can be combined with other conventional forms of apparatus. For example, a distribution valve 40 is provided between the microwave applicator 17 and the filter apparatus 19. From the valve, depending upon its setting, the mixed biological material and solvent can be fed to the filtering apparatus 19, as described above, or fed via a connection 41 to a conventional steam distillation plant. With such an application, the solvent is water and the mixed biological material and water can be treated in the microwave applicator, the water being heated. Alternatively, the water can be heated by the microwave applicator 17 until it reaches the vapour phase, under pressure, and is allowed to condense via connection 41, through the biological material that would be placed into the steam distillation reservoir (hydrodistillation and hydrodiffusion).

In another alternative, valve 40 can be set to permit flow through a connection 42 to a solids/liquid extraction plant. The mixed plant material and solvent may or may not be treated in the microwave applicator for the duration of the initial fill-up reflux sequence. The reflux of this operation could be returned directly to pump 16 for subsequent operations.

A particularly preferred form of the apparatus described above is utilized in conjunction with a supercritical fluid extraction process wherein the microwave applicator utilizes a system of tubing, such as glass, quartz or the like connected to or enclosed within an outer tubing of metal such as steel and in which the microwave apparatus uses an axially positioned microwave generating means within the tube and through which the material to be irradiated flows. In this way, a continuous process with its advantages can be utilized. Still further, other arrangements may be employed where the microwave generating means may be positioned surrounding a microwave transparent tube or conduit and in which the generating means is shielded by suitable material e.g. metal. In such a case, the transparent conduit material can be Teflon (TM) or glass.

For improved operation, it may be desirable to operate the system under vacuum conditions. More particularly, solvent removal by evaporation is greatly facilitated by reducing the pressure while maintaining a relatively low temperature. Connections at 43 and 44 provide for connection to a vacuum source.

A particularly preferred form of the apparatus described above is utilized in conjunction with a supercritical fluid extraction process wherein the microwave applicator utilizes a system of tubing, such as glass, quartz or the like connected to or enclosed within an outer tubing of metal such as steel and in which the microwave apparatus uses an axially positioned microwave generating means within the tube and through which the material to be irradiated flows. In this way, a continuous process with its advantages can be utilized. Still further, other arrangements may be employed where the microwave generating means may be positioned surrounding a microwave transparent tube or conduit and in which the generating means is shielded by suitable material e.g. metal. In such a case, the transparent conduit material can be Teflon (TM) or glass.

The apparatus provides for increased extraction of certain essences and other substances which must be removed, or are preferably removed, without the application of heat, as by heating with a solvent.

## Claims

1. Apparatus for the extraction of essences and other substances from biological material, comprising:
at least one microwave applicator;
means for feeding a mixture of biological material and an extractant through said microwave applicator for treatment thereby;
means for separating liquid from the treated mixture; and
means for removing the extractant from the resulting separated liquid.

2. Apparatus as claimed in claim 1, further comprising:
a mixing tank for mixing said biological material with extractant;
an extractant reservoir and means for controllably feeding extractant to said mixing tank;
means for removing moisture from the extractant;
means for separating liquid comprising a filter apparatus;
means for removing the extractant from a separated liquid comprising an evaporator; and
a condensing means for condensing the evaporated extractant.

3. An apparatus as defined in claims 1 or 2, wherein said microwave applicator is an applicator for containing supercritical liquid extractant.

4. A method of obtaining volatile oils from biological material containing such volatile oils, comprising the steps of:
immersing a source of biological material having a cellular system containing said oils in a non-aqueous organic extractant, said source of material having a substantially intact cellular system and a moisture content sufficient to rupture cells in said system under microwave treatment;
exposing said source material to a microwave energy source to elevate the temperature of said biological material to a degree sufficient to rupture said cellular material and express said volatile oil from the biological material into said organic extractant;
recovering said volatile oil in said organic extractant in a first extraction step;
cooling volatile oils extracted from said biological material with said non-aqueous organic extractant;
adding an additional source of said biological material to the resulting extractant containing extracted volatile oils from said first extraction step;
exposing the combined biological material and the resulting extractant to a microwave energy source sufficient to elevate the temperature of said biological material to rupture said cellular system of the biological material contained in said resulting extractant to express and disperse volatile oil therefrom; and
separating said volatile oils from the further extractant thus obtained.

5. The method as set forth in claim 4, wherein said cellular system comprises a glandular system.

6. The method as set forth in claim 4, wherein said cellular system comprises a vascular system.

7. The method as defined in one of claims 4 to 6, further comprising the step of extracting said oils of said cellular material into a second non-aqueous organic extractant having different extraction properties relative to the first organic extractant, and exposing said oil to said source of microwave energy to generate a second product.

8. The method as defined in any preceding claim, wherein said biological material is plant tissue.

9. The method as defined in any preceding claim, wherein said evaporated extractant is condensed and recycled as a feed extractant.

10. The method as defined in any preceding claim, wherein said volatile oils comprise essential oils.

11. The method as defined in claim 10, wherein said volatile oils comprise omega-3 and omega-6 oils.

12. A method as defined in any preceding claim, comprising a further step of recycling extractant containing extracted volatile oils to increase the concentration of a extracted oils in the extractant.

13. A method as defined in claim 12, wherein the extraction process is carried out using a supercritical liquid.

## Patentansprüche

1. Vorrichtung zur Extraktion von Essenzen und anderen Stoffen aus biologischem Material, die besteht aus:
wenigstens einem Mikrowellen-Bestrahlungstubus; einer Vorrichtung, um eine Mischung aus biologischem Material und einem Extraktionsmittel durch den genannten Mikrowellen-Bestrahlungstubus zu schicken, um sie damit zu behandeln;
einer Vorrichtung zur Abtrennung von Flüssigkeit von der behandelten Mischung; und
einer Vorrichtung zur Entfernung des Extraktionsmittels von der entstandenen abgetrennten Flüssigkeit.

2. Vorrichtung, wie in Anspruch 1 beschrieben, die weiterhin besteht aus:
einem Mischungsbehälter zum Mischen des genannten biologischen Materials mit Extraktionsmittel;
einem Extraktionsmittelvorratsbehälter und einer Vorrichtung zur kontrollierten Zugabe des Extraktionsmittels zu dem genannten Mischungsbehälter;
einer Vorrichtung, um Feuchtigkeit aus dem Extraktionsmittel zu entfernen;
einer Vorrichtung zur Entfernung von Flüssigkeit, die aus einer Filtervorrichtung besteht;
einer Vorrichtung zur Entfernung des Extraktionsmittels aus einer abgetrennten Flüssigkeit, die aus einem Verdampfer besteht; und
einer Kondensationsvorrichtung zur Kondensation des verdampften Extraktionsmittels.

3. Vorrichtung, wie in den Ansprüchen 1 oder 2 beschrieben, bei der der genannte Mikrowellen-Bestrahlungstubus ein Bestrahlungstubus ist, der überkritisches flüssiges Extraktionsmittel enthält.

4. Verfahren, um flüchtige Öle aus biologischem Material zu erhalten, das solche flüchtigen Öle enthält, das aus den Schritten besteht:
Eintauchen einer Quelle an biologischem Material, das ein Zellsystem besitzt, das die genannten Öle enthält, in ein nichtwässriges organisches Extraktionsmittel, wobei die genannte Quelle an Material ein im wesentlichen intaktes Zellsystem und einen Feuchtigkeitsgehalt besitzt, der ausreicht, um die Zellen in genanntem System bei Mikrowellenbehandlung zu zerbrechen;
Aussetzen des genannten Quellmaterials einer Mikrowellenenergiequelle, um die Temperatur des genannten biologischen Materials bis zu einem Grad zu erhöhen, der ausreicht, um das genannte zelluläre Material zu zerbrechen und das genannte flüchtige Öl aus dem biologischen Material in das genannte organische Extraktionsmittel auszudrücken;
Gewinnen des genannten flüchtigen Öls in genanntem organischem Extraktionsmittel in einem ersten Extraktionsschritt;
Kühlen der flüchtigen Öle, die aus genanntem biologischem Material mit genanntem nichtwässrigem organischem Extraktionsmittel extrahiert wurden;
Zufügen einer zusätzlichen Quelle von genanntem biologischem Material zu dem entstandenen Extraktionsmittel, das die extrahierten flüchtigen Öle aus dem genannten ersten Extraktionsschritt enthält;
Aussetzen des verbundenen biologischen Materials und des entstandenen Extraktionsmittels einer Mikrowellenenergiequelle, die ausreicht, um die Temperatur des genannten biologischen Materials zu erhöhen, um das genannte zelluläre System des biologischen Materials zu zerbrechen, das in genanntem entstandenem Extraktionsmittel enthalten ist, um das flüchtige Öl daraus auszudrücken und zu dispergieren; und
Trennung der genannten flüchtigen Öle von dem weiteren Extraktionsmittel, das so erhalten wurde.

5. Verfahren, wie im Anspruch 4 beschrieben, wobei das genannte zelluläre System ein Drüsensystem umfaßt.

6. Verfahren, wie im Anspruch 4 beschrieben, wobei das genannte zelluläre System ein Gefäßsystem umfaßt.

7. Verfahren, wie in einem der Ansprüche 4 bis 6 beschrieben, das weiterhin besteht aus dem Schritt der Extraktion der genannten Öle des genannten zellulären Materials in ein zweites nichtwässriges organisches Extraktionsmittel, das andere Extraktionseigenschaften verglichen mit dem ersten organischen Extraktionsmittel besitzt, und Aussetzung des genannten Öls der genannten Mikrowellenenergiequelle, um ein zweites Produkt zu erzeugen.

8. Verfahren, wie in einem der vorhergehenden Ansprüche beschrieben, wobei das genannte biologische Material Pflanzengewebe ist.

9. Verfahren, wie in einem der vorhergehenden Ansprüche beschrieben, wobei das genannte verdampfte Extraktionsmittel kondensiert und als Nachschubextraktionsmittel zurückgeführt wird.

10. Verfahren, wie in einem der vorhergehenden Ansprüche beschrieben, wobei die genannten flüchtigen Öle essentielle Öle enthalten.

11. Verfahren, wie in Anspruch 10 beschrieben, wobei die genannten flüchtigen Öle Omega-3 und Omega-6 Öle enthalten.

12. Verfahren, wie in einem der vorhergehenden Ansprüche beschrieben, das einen weiteren Schritt der Rückführung von Extraktionsmittel, das extrahierte flüchtige Öle enthält, umfaßt, um die Konzentration der extrahierten Öle in dem Extraktionsmittel zu erhöhen.

13. Verfahren, wie im Anspruch 12 beschrieben, wobei der Extraktionsvorgang unter Benutzung einer überkritischen Flüssigkeit ausgeführt wird.

## Revendications

1. Appareil pour l'extraction d'essences et d'autres substances à partir d'une matière biologique, comprenant :
au moins un applicateur de micro-ondes ;
un moyen pour introduire un mélange d'une matière biologique et d'un agent d'extraction dans ledit applicateur de micro-ondes, pour qu'il soit traité par ce dernier ;
un moyen pour séparer le liquide d'avec le mélange traité ; et
un moyen pour extraire l'agent d'extraction du liquide séparé obtenu.

2. Appareil selon la revendication 1, qui comprend en outre :
une cuve de mélange, destinée à mélanger ladite matière biologique et l'agent d'extraction ;
un réservoir d'agent d'extraction et un moyen permettant d'introduire d'une manière régulée l'agent d'extraction dans ladite cuve de mélange ;
un moyen pour extraire l'humidité de l'agent d'extraction ;
un moyen de séparation du liquide, comprenant un appareil de filtration ;
un moyen pour enlever l'agent d'extraction d'un liquide séparé, comprenant un évaporateur ; et
un moyen de condensation, pour condenser l'agent d'extraction évaporé.

3. Appareil selon la revendication 1 ou 2, dans lequel ledit applicateur de micro-ondes est un applicateur destiné à contenir un agent d'extraction liquide supercritique.

4. Procédé d'obtention d'huiles volatiles à partir d'une matière biologique contenant ces huiles volatiles, qui comprend les étapes consistant :
à immerger une source de matière biologique ayant un système cellulaire contenant lesdites huiles dans un agent d'extraction organique non aqueux, ladite source de matière ayant un système cellulaire essentiellement intact et une teneur en humidité suffisante pour rompre les cellules dudit système sous l'effet du traitement par des micro-ondes ;
à exposer ladite matière source à une source d'énergie à micro-ondes, pour élever la température de ladite matière biologique à une valeur suffisante pour rompre ladite matière cellulaire et exprimer ladite huile volatile de la matière biologique, pour la faire pénétrer dans ledit agent d'extraction organique ;
dans une première étape d'extraction, à récupérer ladite huile volatile se trouvant dans ledit agent d'extraction organique ;
à refroidir les huiles volatiles extraites de ladite matière biologique, avec ledit agent d'extraction organique non aqueux ;
à ajouter une source supplémentaire de ladite matière biologique à l'agent d'extraction obtenu contenant les huiles volatiles extraites provenant de ladite première étape d'extraction ;
à exposer la combinaison de la matière organique et de l'agent d'extraction obtenu, à une source d'énergie à micro-ondes suffisante pour élever la température de ladite matière biologique au point de rompre ledit système cellulaire de la matière biologique, contenu dans ledit agent d'extraction obtenu, dans le but d'en exprimer et disperser l'huile volatile ; et
à séparer de l'agent d'extraction ainsi obtenu lesdites huiles volatiles.

5. Procédé selon la revendication 4, dans lequel ledit système cellulaire comprend un système glandulaire.

6. Procédé selon la revendication 4, dans lequel ledit système cellulaire comprend un système vasculaire.

7. Procédé selon l'une des revendications 4 à 6, qui comprend en outre l'étape consistant à extraire lesdites huiles de ladite matière cellulaire à l'aide d'un deuxième agent d'extraction organique non aqueux ayant des propriétés d'extraction différentes de celles du premier agent d'extraction organique, et à exposer ladite huile à ladite source d'énergie de micro-ondes, pour générer un deuxième produit.

8. Procédé selon l'une quelconque des revendications précédentes, dans lequel ladite matière biologique est un tissu végétal.

9. Procédé selon l'une quelconque des revendications précédentes, dans lequel ledit agent d'extraction évaporé, est condensé et recyclé comme agent d'extraction réutilisable dans le procédé.

10. Procédé selon l'une quelconque des revendications précédentes, dans lequel lesdites huiles volatiles comprennent des huiles essentielles.

11. Procédé selon la revendication 10, dans lequel lesdites huiles volatiles comprennent les huiles omega-3 et omega-6.

12. Procédé selon l'une quelconque des revendications précédentes, qui comprend une étape supplémentaire, consistant à recycler l'agent d'extraction contenant des huiles volatiles extraites, pour augmenter la concentration des huiles extraites dans l'agent d'extraction.

13. Procédé selon la revendication 12, dans lequel le procédé d'extraction est mis en oeuvre par utilisation d'un liquide supercritique.
